# DEMANDE DE BREVET EUROPEEN

(11) **EP 4 621 014 A1**
(43) Date de publication de la demande: **24.09.2025**
(21) Numéro de dépôt: 25165244.2
(22) Date de dépôt: 21.03.2025
(51) Int. Cl.: C09C 1/24, C04B 24/18, C09C 1/34, C09C 1/36, C09C 1/44, C09C 3/04, C09C 3/08, C04B 18/02, C04B 28/02, C04B 111/82

(54) **PRODUIT COLORÉ À BASE DE PIGMENT ET D`ACIDE LIGNOSULFONIQUE, SON PROCÉDÉ DE FABRICATION, ET SES UTILISATIONS**

(30) Priorité: 22.03.2024 FR 2402859
(71) Demandeur: Supply Company, 33800 Bordeaux (FR)
(72) Inventeur: RONTEIX, Xavier, 33800 BORDEAUX (FR)
(74) Mandataire: Aquinov

(57) **Abrégé**

La présente invention concerne un produit coloré se présentant sous forme solide dont la taille de sa plus grande dimension est comprise entre 3 et 12mm, ledit produit étant constitué essentiellement d'au moins un pigment et d'au moins un acide lignosulfonique ou l'un de ses dérivés. L'invention concerne également un procédé de fabrication, et l'utilisation dudit produit coloré.

## Description

### Domaine technique

L'invention se rapporte au domaine des pigments, notamment des pigments inorganiques et organiques, destinés à être utilisé pour colorer des matrices ou des matériaux d'intérêt, notamment des matériaux de construction. En particulier, l'invention vise un produit coloré particulier se présentant sous forme solide dont la taille de sa plus grande dimension est comprise entre 3 et 12 mm, ledit produit étant constitué essentiellement d'au moins un pigment et d'au moins un acide lignosulfonique ou l'un de ses dérivés. L'invention concerne également un procédé pour sa fabrication, et ses utilisations.

### Etat de l'art

Dans le domaine de la présente invention, la plupart des pigments se présente sous forme de poudre, ceux-ci sont utilisés pour colorer ultérieurement une matrice ou un matériau d'intérêt. Toutefois, lors d'un tel procédé de fabrication ou de préparation, les pigments classiquement utilisés qui se présente donc sous forme de poudre, présentent l'inconvénient d'émettre une quantité très importante de poussières, étant donné la finesse de leurs particules. Il en résulte des difficultés de nettoyage des dispositifs utilisés pour colorer des matériaux, par exemple les doseurs. En outre, certains pigments utilisés contiennent des substances, particules potentiellement toxiques pour l'Homme et l'environnement. Ceci est dû à la taille nanoparticulaire de ces substances composant certains pigments. A titre d'exemple, le dioxyde de titane (TiO₂) présente une toxicité avérée pour l'Homme et l'environnement. Il est donc nécessaire, de prendre des dispositions pour éviter tout danger pour l'Homme et l'environnement.

Dans le cas de pigments comprenant des substances inertes et non toxiques, il existe également un besoin de limiter l'émission de poussière, afin d'éviter l'encrassement des dispositifs, limiter leur nettoyage, mais également de limiter l'inhalation de ces poussières par les utilisateurs, améliorant ainsi leurs conditions de travail.

Il existe donc un besoin pour de nouvelles formes de pigments permettant de surmonter les inconvénients précités, notamment l'encrassement des machines et des dispositifs classiquement utilisés pour colorer les matériaux ou matrices à l'aide desdits pigments ou encore de diminuer la dangerosité de ces pigments pour l'Homme.

L'inventeur s'est ainsi intéressé à des pigments inorganiques ou organiques, sous forme solide, qui se distingue des pigments sous forme de poudre ayant les inconvénients précités, tout en présentant une bonne stabilité, notamment une bonne résistance à l'écrasement et une bonne dispersibilité.

Il est déjà connu des pigments formulés sous forme de granule, de microgranule, ou de microbille. Toutefois, ceux-ci ne surmontent pas l'ensemble des inconvénients car lesdites granules sont également émettrices de poussières et se désagrège très facilement, par simple contact. Ces pigments se présentent alors, après écrasement, sous forme de poudre, ne surmontant donc pas les inconvénients précités.

La formulation de pigments avec des ingrédients supplémentaires est également connu, ceux-ci permettant de jouer le rôle de liant et ainsi éviter la formation de poudre et donc de poussière. Toutefois, ces produits se dispersent uniquement par la conjonction de la chaleur et des frictions et ne sont donc pas facilement dispersible et donc non adaptés pour être incorporé dans les matériaux de construction.

Ainsi, il existe plusieurs besoins, à savoir que le produit coloré final ne doit pas être émetteur de poussière et doit pouvoir résister aux contraintes liées au transport et au stockage, tout en pouvant être dispersé facilement (sans avoir recours à un traitement thermique combiné à une friction) lors du mélange avec le matériau ou la matrice dans lequel on souhaite incorporer le produit coloré selon la présente invention.

### Résumé de l'invention

Pour répondre à ces besoins, l'invention propose un produit coloré constitué essentiellement d'un mélange, lui-même constitué essentiellement d'au moins un pigment d'intérêt et d'au moins un acide lignosulfonique ou dérivé, la taille dudit produit est comprise entre 3 et 12mm. Ce produit est alors suffisamment dispersible lors du mélange pour être incorporé dans la masse d'un matériau ou d'une matrice destiné à être coloré et présente une résistance à l'écrasement.

Ainsi, l'invention concerne un produit coloré sous forme solide constitué essentiellement d'un mélange d'au moins un pigment et d'au moins un acide lignosulfonique ou l'un de ses dérivés, dans lequel la taille de la plus grande dimension dudit produit est comprise entre 3 et 12mm. En particulier, ledit produit coloré présente une masse volumique supérieure à 4g/cm³.

Préférentiellement, le produit se présente sous forme de granule, tablette, comprimé, granulé, pellet, agglomérat, bille, ou pastille.

De façon particulièrement préféré, le produit coloré est constitué d'un unique mélange homogène, constitué essentiellement d'au moins un pigment et d'au moins un acide sulfonique, formant ledit produit coloré. En d'autres termes le produit n'est pas un système de multicouches, comprenant, par exemple, un noyau et une superposition de couches formées à l'extérieur du noyau, enrobant ou encapsulant celui-ci.

Selon un objet préféré de l'invention, l'acide lignosulfonique ou l'un de ses dérivés est choisi parmi le lignosulfonate de sodium, le lignosulfonate de calcium, et leur mélange.

Très préférentiellement, le mélange est constitué d'au moins un pigment, et d'au moins un acide lignosulfonique ou l'un de ses dérivés.

Selon l'un des quelconques modes de réalisation précédemment décrit, le mélange comprend préférentiellement au moins 90% de pigments en poids du poids total du mélange.

Selon l'un des quelconques modes de réalisation précédemment décrit, le mélange comprend également, préférentiellement entre 1 et 10% d'acide lignosulfonique, en poids du poids total du mélange, plus préférentiellement entre 1 et 6%.

Selon un autre objet de l'invention, le produit coloré, en particulier le mélange constituant ledit produit, peut également comprendre au moins un dispersant ou au moins une charge minérale.

Selon un autre objet particulièrement préféré, le pigment compris dans le mélange formant le produit coloré selon l'invention est un pigment inorganique choisi parmi un oxyde de fer, un oxyde de carbone, le dioxyde titane, l'oxyde de chrome, le bleu de cobalt, le bleu outre-mer ou phtalo, et leur mélange.

Enfin, le produit coloré selon la présente invention est très préférentiellement obtenu par compactage ou compression à une force comprise entre 2 et 25 kN, permettant ainsi d'obtenir la résistance et la dispersibilité souhaitée du produit coloré selon la présente invention. Très préférentiellement, la force est comprise entre 11 et 22 kN.

Selon un autre aspect, l'invention se rapporte également à un procédé de fabrication dudit produit coloré selon l'invention. Ledit procédé comprenant au moins les étapes suivantes :
a. Mélange d'au moins un pigment sous forme de poudre, d'eau, et d'au moins un acide lignosulfonique ou l'un de ses dérivés, formant une suspension liquide,
b. Séchage par pulvérisation de la suspension obtenue lors de l'étape a), formant des microbilles constitué essentiellement du pigment et de l'acide lignosulfonique ou l'un de ses dérivés, lesdites microbilles ayant une taille comprise entre 0,2 et 0,6 mm
c. Compression des microbilles obtenues lors de l'étape b) à une force comprise entre 2 et 25 kN, préférentiellement entre 11 et 22 kN, formant le produit colorée sous forme solide.

Un tel procédé est particulièrement d'intérêt pour obtenir les propriétés recherchées du produit coloré selon l'invention, à savoir une stabilité accrue, sans pollution ni salissure, permettant d'être utilisé dans des systèmes de dosage automatique, et ayant une bonne dispersibilité.

Préférentiellement, l'étape a) de mélange comprend au moins 90% de pigment(s) en poids du poids total du mélange, et/ou au plus 10% d'acide lignosulfonique ou l'un de ses dérivés en poids du poids total du mélange.

Selon un dernier aspect, l'invention se rapporte à l'utilisation du produit coloré selon l'invention pour la coloration d'un matériau ou d'une matrice, en particulier de matériaux de construction liés par de la chaux, du ciment, tels que du béton, du mortier de ciment, de l'enduit de façade, du grès calcaire, mais également pour la coloration d'asphalte, de bitume, de liant de synthèse ou de revêtement routier, ainsi que de peintures. De façon très avantageuse, le produit coloré selon l'invention est incorporé dans la masse du matériau ou de la matrice d'intérêt.

D'autres caractéristiques et avantages ressortiront de la description détaillée de l'invention, et des exemples qui vont suivre.

### Description détaillée de l'invention

### Définition

Par « produit coloré » au sens de l'invention, on entend un pigment modifié, c'est-à-dire ne se présentant plus sous sa forme native. Celui-ci étant combiné avec au moins liant, en particulier un acide lignosulfonique ou l'un de ses dérivés. Préférentiellement, la taille de sa plus grande dimension est comprise entre 3 et 12mm.

Par « poudre », ou « farine », ou « poudre farineuse » au sens de l'invention, on entend une particule se présentant dans un état sous forme solide finement broyée, en particulier la taille de la particule est inférieure à 30µm, plus préférentiellement inférieure à 10µm.

Ainsi, dans le contexte de la présente invention, les utilisateurs souhaitent avoir accès à un produit coloré qui soit à la fois stable mais également facilement dispersible. Il en résulte que leurs besoins reposent sur des propriétés contradictoires, à savoir une bonne stabilité mécanique, notamment une bonne résistance à l'écrasement du produit coloré mais également de bonnes propriétés de dispersion dans la matrice ou dans le matériau à colorer.

Pour y parvenir, l'inventeur a développé un produit coloré à base d'au moins un pigment et d'au moins un acide lignosulfonique ou l'un de ses dérivés, formant ledit produit coloré, celui-ci présentant une taille comprise entre 3 et 12 mm et obtenu par compression à une force comprise entre 2 et 25 kN.

La présente invention a donc pour objet un produit coloré sous forme solide constitué essentiellement d'un mélange d'au moins un pigment et d'au moins un acide lignosulfonique ou l'un de ses dérivés, et la taille de la plus grande dimension dudit produit est comprise entre 3 et 12mm. Par ailleurs, ledit produit présente avantageusement une masse volumique supérieure à 4g/cm³.

Par le biais de ces travaux, l'inventeur a ainsi mis au point un produit coloré qui soit stable et facilement dispersible, surmontant ainsi les inconvénients de l'art antérieur.

La taille de la plus grande dimension dudit produit coloré comprise entre 3 et 12 mm, permet d'obtenir les propriétés de stabilité recherchées et restreint fortement l'émission de poussière lors du procédé de préparation et de traitement des matrices ou matériaux à colorer. En effet, lors du processus, la seule friction permet de disperser facilement le mélange comprenant le pigment et l'acide lignosulfonique, et l'incorporer dans la masse de la matrice ou du matériau à colorer. Il en résulte une émission de poussière très fortement réduite, ce qui surmonte les inconvénients de l'art antérieur.

Selon un objet particulièrement préféré, le produit coloré se présente sous forme de granule, tablette, comprimé, granulé, pellet, agglomérat, bille, ou pastille, plus préférentiellement sous forme de granule, tablette ou comprimé dont la plus grande dimension est comprise entre 3 et 12mm.

Selon un autre objet, le produit coloré selon l'invention est constitué d'un mélange lui-même constitué essentiellement d'au moins un pigment, et d'au moins un acide lignosulfonique ou l'un de ses dérivés. Aussi, le produit selon la présente est constitué d'un unique mélange, formant le produit coloré selon la présente invention. En d'autres termes, le produit coloré selon l'invention n'est pas un assemblage de plusieurs couches en présence ou non d'un noyau et n'est donc pas un système multicouche. Ainsi, la présente invention se rapporte à un mélange homogène constitué essentiellement d'au moins un pigment et d'au moins un acide lignosulfonique, formant le produit selon l'invention. Ledit produit n'étant ni enrobé, ni encapsulé.

Préférentiellement, l'acide lignosulfonique ou l'un de ses dérivés est le lignosulfonate de sodium et/ou le lignosulfonate de calcium, permettant de lier les particules du mélange, et faciliter la cohésion et sa stabilité.

Selon un objet particulier de l'invention, le mélange comprend au moins 90% de pigments en poids du poids total du mélange, ce qui permet d'obtenir un pouvoir colorant du pigment satisfaisant.

Selon un autre objet particulier de l'invention, le mélange comprend entre 1 et 10% d'acide lignosulfonique en poids du poids total du mélange, ce qui permet une bonne stabilité et une bonne dispersibilité. Plus préférentiellement le mélange comprend entre 1 et 6%, encore plus préférentiellement entre 3 et 6%, en poids du poids total du mélange.

Selon un autre mode de réalisation, le produit coloré peut comprendre d'autres ingrédients, en particulier le produit coloré peut comprendre également un dispersant ou une charge minérale. Le dispersant permettant d'améliorer encore plus la dispersibilité du produit coloré et la charge minérale permettant d'ajuster la coloration finale d'intérêt, ainsi que de réduire les couts de formulation du produit coloré.

Très préférentiellement, le pigment est un pigment inorganique choisi parmi un oxyde de fer, un oxyde de carbone, le dioxyde titane, l'oxyde de chrome, le bleu de cobalt, le bleu outre-mer ou phtalo, et leur mélange. Lorsque le pigment est un mélange de pigments, l'Homme du métier de par ses connaissances générales sait comment mélanger et adapter les quantités de chaque pigment afin d'obtenir la couleur d'intérêt.

Selon un autre objet particulièrement préféré et d'intérêt dans le contexte de la présente invention, le produit coloré est obtenu par compactage ou compression à une force comprise entre 2 et 25 kN, plus préférentiellement entre 11 et 22 kN. Celle-ci permettant d'obtenir les propriétés recherchées à savoir, la stabilité, la résistance à l'écrasement, tout en présentant une bonne dispersibilité.

Aussi, l'ajout d'au moins un acide lignosulfonique ou l'un de ses dérivés à un pigment, formant un mélange, ledit mélange étant compacté ou compressé à une force comprise entre 2 et 25 kN, permet d'améliorer la stabilité et de conserver une bonne dispersibilité.

Selon un mode de réalisation particulièrement préféré, le produit coloré selon l'invention est obtenu par un procédé comprenant les étapes suivantes :
a. Mélange d'au moins un pigment avec au moins un acide lignosulfonique ou l'un de ses dérivés, dans de l'eau, de façon à former une suspension liquide,
b. Séchage par pulvérisation de la suspension obtenue lors de l'étape a), formant des microbilles comprenant le pigment et l'acide lignosulfonique ou l'un de ses dérivés, lesdites microbilles ayant une taille comprise entre 0,2 et 0,6 mm,
c. Compression des microbilles obtenues lors de l'étape b) à une force comprise entre 2 et 25 kN, formant le produit colorée sous forme solide.

Ainsi, selon un deuxième aspect, la présente invention se rapporte également à un procédé de fabrication d'un produit coloré sous forme solide, comprenant au moins les étapes suivantes :
a. Mélange d'au moins un pigment avec au moins un acide lignosulfonique ou l'un de ses dérivés, dans l'eau, de façon à former une suspension liquide,
b. Séchage par pulvérisation de la suspension obtenue lors de l'étape a), formant des microbilles comprenant le pigment et l'acide lignosulfonique ou l'un de ses dérivés, lesdites microbilles ayant une taille comprise entre 0,2 et 0,6 mm,
c. Compression des microbilles obtenues lors de l'étape b) à une force comprise entre 2 et 25 kN, formant le produit coloré sous forme solide.

Préférentiellement, l'étape a) de mélange comprend au moins 90% de pigment(s) en poids du poids total du mélange et au plus 10% d'acide lignosulfonique ou l'un de ses dérivés, en poids du poids total du mélange.

Une fois obtenu la suspension liquide homogène comprenant le pigment et l'acide lignosulfonique, ladite suspension est séchée par pulvérisation, formant des microbilles ayant une taille comprise entre 0,2 et 0,6 mm. Préférentiellement le séchage est mis en œuvre à une température de l'ordre de 400°C afin de sécher instantanément la solution. Enfin, une dernière étape de compression desdites microbilles à une force préférentiellement comprise entre 2 et 25 kN, permet de former et d'obtenir le produit colorée selon l'invention sous forme solide.

De façon particulièrement surprenante, l'inventeur a ainsi identifié qu'une étape intermédiaire de préparation et d'obtention de microbilles avant leur compression, formant le produit coloré selon l'invention, permet de surmonter les inconvénients précités.

En effet, les pigments natifs sous forme de poudre et dépourvus de liant, ne peuvent pas être comprimés directement pour réaliser des comprimés, tablettes. Pour y parvenir, il est nécessaire de pouvoir chasser l'air lors de l'étape de compression. Tant et si bien que lorsque le pigment se trouve sous forme de poudre, les particules composant la poudre de pigment est trop fine et comprend très peu d'air entre lesdites particules. Il en résulte une impossibilité technique de chasser l'air lors de la compression et donc d'obtenir un produit coloré qui soit stable et sous forme de tablette, comprimé etc. dont la plus grande taille est comprise entre 3 et 12 mm.

La formation d'un produit intermédiaire sous forme de granule, microgranule ou microbille dont la taille est préférentiellement comprise entre 0,2 et 0,6 mm, permet ainsi de surmonter cet inconvénient et permet la formation du produit coloré selon l'invention sous forme solide qui soit stable et dont la taille est comprise entre 3 et 12mm.

Enfin, selon un dernier aspect, l'invention se rapporte à l'utilisation du produit coloré selon l'invention pour la coloration de matériaux ou matrices, notamment de matériaux de construction liés par de la chaux ou du ciment, tels que du béton, du mortier de ciment, de l'enduit, du grès calcaire, mais également pour la coloration d'asphalte, de bitume, de liant de synthèse, de peinture, de résine, ou de revêtement routier.

L'invention est à présent illustrée par des exemples non limitatifs de compositions selon l'invention et par des résultats.

### Exemples

### Exemple 1 - Produit coloré selon l'invention

Le produit coloré selon l'exemple 1 est obtenu selon le procédé suivant :
a. Mélange d'un pigment, à savoir l'oxyde de fer avec un acide lignosulfonique, à savoir le lignosulfonate de sodium, dans une solution aqueuse, de façon à former une suspension liquide,
b. Séchage par pulvérisation de la suspension obtenue lors de l'étape a), à haute température (400°C) au travers d'une matrice ayant des pores de 0,6mm de diamètre, formant des microgranules dont le diamètre est d'au plus 0,6mm,
c. Compression des microgranules obtenues lors de l'étape précédente à une force égale à 20kN.

On obtient alors un produit coloré selon la présente invention, à savoir sous forme de tablette dont la plus grande dimension de ladite tablette est de 10mm. Ladite tablette peut-être manipulée et stockée sans observer de délitement ou désagrégation du mélange.

### Exemple 2 - Produit coloré hors invention

Le produit coloré selon l'exemple 2 est obtenu selon le procédé suivant :
a. Mélange d'un pigment, à savoir l'oxyde de fer avec un acide lignosulfonique, à savoir le lignosulfonate de sodium,
b. Compression du mélange obtenu à l'étape précédente à une force égale à 20kN.

On obtient alors un produit coloré selon la présente invention, à savoir sous forme de tablette dont la plus grande dimension de ladite tablette est de 10mm. Ladite tablette ne présente aucune stabilité. Le produit obtenu s'effrite très facilement, se délite et se désagrège, revenant à l'état de poudre lors de sa manipulation et son stockage.

### Exemple 3 - Produit coloré hors invention

Le produit coloré selon l'exemple 3 est obtenu par compression du pigment, à savoir l'oxyde de fer à une force égale à 20kN.

On obtient alors un produit coloré selon la présente invention, à savoir sous forme de tablette dont la plus grande dimension de ladite tablette est de 10mm. Ladite tablette ne présente aucune stabilité. Le produit obtenu s'effrite très facilement, se délite et se désagrège, revenant à l'état de poudre lors de sa manipulation et son stockage.

## Revendications

1. Produit colorée sous forme solide constitué essentiellement d'un mélange d'au moins un pigment et d'au moins un acide lignosulfonique ou l'un de ses dérivés, **caractérisé en ce que** la taille de la plus grande dimension dudit produit est comprise entre 3 et 12mm.

2. Produit coloré selon la revendication précédente, **caractérisé en ce que** le produit se présente sous forme de granule, tablette, comprimé, granulé, pellet, agglomérat, bille, ou pastille.

3. Produit coloré selon l'une des précédentes revendications, **caractérisée en ce que** l'acide lignosulfonique ou l'un de ses dérivés est le lignosulfonate de sodium et/ou le lignosulfonate de calcium.

4. Produit coloré selon l'une des précédentes revendications, **caractérisée en ce que** le mélange comprend au moins 90% de pigments en poids du poids total du mélange.

5. Produit coloré selon l'une des précédentes revendications, **caractérisée en ce que** le mélange comprend entre 1 et 10% d'acide lignosulfonique en poids du poids total du mélange.

6. Produit coloré selon l'une des précédentes revendications, **caractérisée en ce que** le mélange comprend également un dispersant ou une charge minérale.

7. Produit coloré selon l'une des précédentes revendications, **caractérisé en ce que** au moins un pigment est un pigment inorganique choisi parmi un oxyde de fer, un oxyde de carbone, le dioxyde titane, l'oxyde de chrome, le bleu de cobalt, le bleu outre-mer ou phtalo, et leur mélange.

8. Produit coloré selon l'une des précédentes revendications, **caractérisé en ce qu'**il est obtenu par compactage ou compression à une force comprise entre 2 et 25 kN.

9. Procédé de fabrication d'un produit colorée sous forme solide selon l'une des précédentes revendications, comprenant les étapes suivantes :
a. Mélange d'au moins un pigment et d'au moins un acide lignosulfonique ou l'un de ses dérivés, formant une suspension liquide,
b. Séchage par pulvérisation de la suspension obtenue lors de l'étape a), formant des microbilles comprenant le pigment et l'acide lignosulfonique ou l'un de ses dérivés, lesdites microbilles ayant une taille comprise entre 0,3 et 0,6 mm, et
c. Compression des microbilles obtenues lors de l'étape b) à une force comprise entre 2 et 25 kN, formant le produit colorée sous forme solide.

10. Utilisation d'un produit coloré selon l'une des revendications 1 à 7 pour la coloration de matériaux de construction liés par de la chaux et/ou du ciment, tels que du béton, du mortier de ciment, de l'enduit, du grès calcaire ou pour la coloration d'asphalte, de bitume, de liant de synthèse ou de revêtement routier, ou de peintures.
